# Europäisches Patentamt
## European Patent Office
## Office européen des brevets

(11) Publication number: **0 055 117**
**B1**

(12) **EUROPEAN PATENT SPECIFICATION**

(45) Date of publication of patent specification: **04.03.87**

(21) Application number: **81306001.9**

(22) Date of filing: **21.12.81**

(51) Int. Cl.⁴: **F 02 D 41/30, F 02 M 51/04, F 02 M 57/02, F 02 M 69/04**

(54) Fuel injection pump.

(30) Priority: **22.12.80 US 219108**

(43) Date of publication of application:
**30.06.82 Bulletin 82/26**

(45) Publication of the grant of the patent:
**04.03.87 Bulletin 87/10**

(84) Designated Contracting States:
**DE FR GB**

(56) References cited:
**DE-A-2 809 122**
**GB-A-2 017 205**
**GB-A-2 026 088**
**US-A-1 664 610**
**US-A-2 399 587**
**US-A-3 077 872**
**US-A-3 851 635**
**US-A-3 896 779**

**AUTOMOTIVE HANDBOOK BOSCH. page 291**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Schechter, Michael Moses**
**27686 Sutherland**
**Michigan 48076 (US)**

(74) Representative: **Messulam, Alec Moses et al**
**A. Messulam & Co. 24 Broadway**
**Leigh on Sea Essex SS9 1BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to fuel injection pumps.

U.S. Patent No. 3,851,635 discloses a fuel-supply system for one or more cylinders of an internal-combustion engine in an automotive vehicle, wherein an engine driven pump of the reciprocating-piston type delivers fuel under pressure to a distributing channel from which a first conduit extends to an injector or a cylinder served thereby, another extension conduit returning excess fuel to a drain. The first conduit contains a normally closed valve biased by a force less than that exerted upon the valve body by the pump pressure whereby, in response to a pressure buildup within the channel upon a blocking of the drain during a compression stroke of the pump, this control valve is forced open to admit fuel to the cylinder or to an antechamber periodically communicating therewith for a period depending upon various operating parameters which control a bypass valve in the second conduit to close and open the fuel-return path. The temporary closure of this bypass valve, therefore, determines the injection interval which may extend over all or part of the compression stroke.

U.S. Patent 1,664,610 discloses a fuel feeding system for internal combustion engines including a pump for delivering a charge of fuel to each of a plurality of engine cylinders, a valve to control passage of fuel to its supply side to control the amount of fuel delivered by the pump, an electromagnet to control said valve, a distributor valve for each of said cylinders to control the supply of fuel from the pump to its cylinder, a control electro-magnet for each of said distributor valves, means for energising said electromagnets for the distributor valves including a current distributor, and means for associating said current distributor with the electromagnet of said pump valve to hold it open and prevent operation of one of said distributor valves without interfering with the normal operation of the pump and of said distributor in connection with the electromagnets of the other distributor valve. The electromagnets of the distributor valves are energised in a predetermined order whereby separate metered charges of the pump are individually distributed to each cylinder during a complete engine cycle.

According to the invention there is provided an automotive type internal combustion engine fuel injection pump including a housing having a central bore, a plunger reciprocably movable within the bore adjacent one end, a spring closed delivery control valve normally blocking the other end of the bore, a source of supply fuel under a first low pressure connected to the bore space between the plunger and valve for supplying fuel to the space upon movement of the plunger away from the valve in fuel intake stroke, the movement of the plunger towards the valve in a pumping stroke providing pressurization of the fuel to a level above the delivery valve spring force, a plurality of fuel outlet lines corresponding in number to the number of engine cylinders connected at one end to the bore downstream of the valve and connected at the other ends each to a separate engine cylinder, each of the outlet lines containing a fuel outlet valve normally closed to block fuel flow to the cylinders, each of the outlet valves having a solenoid connected thereto for moving the outlet valve to an open position upon energization of its solenoid, the solenoids being selectively energized one at a time to assure the injection of fuel into each cylinder on a one at a time schedule, force means to reciprocate the plunger, and stroke control means to variably control the stroke of the plunger to vary the duration and magnitude of injection of fuel to each of the outlet lines, the force means comprising a main solenoid having an armature connected to the plunger, the control means including electrical means to vary the voltage impulses to the main solenoid as a function of varying engine operating conditions to vary the duration and magnitude of pumping fuel by the plunger to agree with a predetermined schedule, the control means also energising the fuel outlet line solenoids in sequence one at a time while deenergising the remaining fuel outlet line solenoids to connect the output from the plunger past a different outlet valve upon each successive pumping stroke of the plunger, and feedback position sensor means sensing the position of the plunger and connected to the electrical means for correcting the pumping stroke of the plunger thereby providing pumping fuel in accordance with the predetermined schedule.

Further according to the invention there is provided an automotive type internal combustion engine fuel injection pump including a housing having a central bore, a plunger reciprocably movable within the bore adjacent one end, a spring closed delivery control valve normally blocking the other end of the bore, a source of supply fuel under a first low pressure connected to the bore space between the plunger and valve for supplying fuel to the space upon movement of the plunger away from the valve in a fuel intake stroke, the movement of the plunger towards the valve in a pumping stroke providing pressurisation of the fuel to a level above the delivery valve spring force, a plurality of fuel outlet lines corresponding in number to the number of engine cylinders connected at one end to the bore downstream of the valve and connected at their other ends each to a separate engine cylinder, each of the outlet lines containing a fuel outlet valve normally closed to block fuel flow to the cylinders, each of the outlet valves having a solenoid connected thereto for moving the outlet valve to an open position upon energization of its solenoid, the solenoids being selectively energized one at a time to assure the injection of fuel into each cylinder on a one at a time schedule, force means to reciprocate the plunger, and stroke control means to variably control the stroke of the plunger to vary the duration and magnitude of injection of fuel to each of the outlet lines, the force means comprising a source of high pressure fluid selectively connectable to the plunger for moving the same, the control means including electrical means to apply and vent the fluid to and from the plunger and to control the duration and magnitude of the fluid force level to control the pumping stroke of the plunger, the control means also energising the fuel outlet line solenoids in sequence one at a time while deenergising the remaining fuel outlet line solenoids to connect the output from the plunger past a different outlet valve upon each successive pumping stroke of the plunger and feedback position sensor means sensing the position of the plunger and connected to the electrical means for correcting the pumping stroke of the plunger thereby providing pumping fuel in accordance with the predetermined schedule.

Embodiments of the invention will now be described, by way of example only, with reference to the accompanying drawings, in which:—

Figure 1 is an axial cross-sectional view of one embodiment of a fuel injection pump constructed according to the invention;

Figure 2 is a radial cross-sectional view taken on a plane indicated by and viewed in the direction of the arrows 2—2 of Figure 1;

Figure 3 is a cross-sectional view of a pump similar to that of Figure 1 and illustrating another embodiment of the invention;

Figure 4 is a schematic line diagram representative of a fuel control system for the embodiment of the pump shown in Figure 3; and

Figure 5 is a line diagram type representation of a feedback control system for the pump embodiments illustrated in Figures 1 and 3.

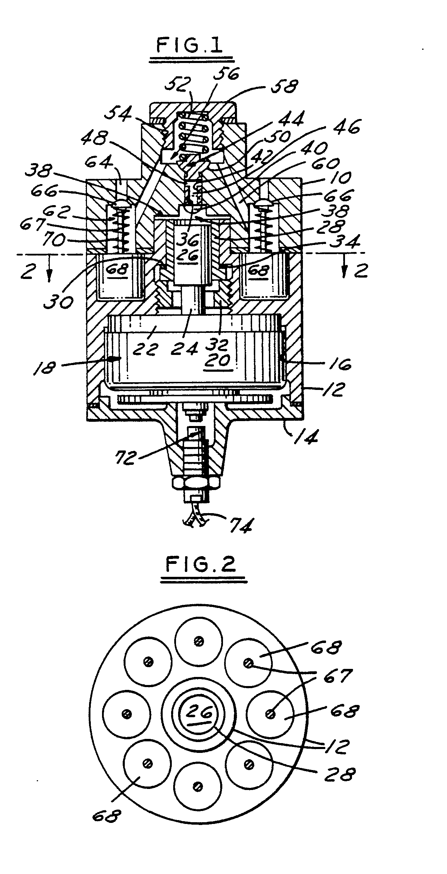

Figure 1 shows a fuel injection pump having a housing consisting essentially of three parts, an upper body part 10, a main body part 12, and a lower body part 14, all secured together by suitable means, not shown. The main body part 12 has a large stepped diameter central cavity 16 in which is mounted a main solenoid 18 having a stationary casing 20. A movable armature 22 projects axially from both ends of the casing 20 and is secured to the stem 24 of a plunger 26. Plunger 26 is reciprocably mounted for sliding within a stationary sleeve 28 located against a shoulder 30 in main body part 12 by a nut 32. A copper gasket 34 between the sleeve 28 and the main body part 12 is crushable upon takeup of the nut 32 to seal against the leakage of fuel between the sleeve and main body part.

The upper housing part 10 contains a main fuel passage 36 in the form of a stepped diameter bore. The widest end of the main fuel passage 36 receives projecting portions of the main body part 12 and the ends of sleeve 28 which defines therewith a fuel chamber 38 having a fuel inlet passage 40 thereto. The fuel inlet passage 40 contains a one-way check valve, not shown, and is adapted to be connected to any suitable source of fuel under relatively low pressure, 193 to 207 kPa (28—30 psi), for example. The pressure level is sufficient to move plunger 26 downwardly when the solenoid is deenergised until stopped by a mechanical stop, not shown.

A reduced diameter portion 4 of the main fuel passage 36 contains a valve member 44 of a conventional retraction type delivery control valve having a lower fuel bore 46 intersected by cross-bores 48. The upper terminal portion of the valve member 44 contains a conically shaped head 50 adapted to seat against a mating portion of the upper housing part 10 to block flow of fuel from chamber 38 past the delivery control valve. A light spring 52 maintains the valve member 44 seated in the position shown in the absence of a buildup of fuel pressure in the fuel chamber 38 to a level above the force of the spring 52. A recess 54 in the upper part of the upper housing part 10 defines a fuel distribution chamber 56 closed by a cap threadably mounted to the housing. The cap further constitutes a seat for the spring 52.

Referring now to both Figures 1 and 2, the fuel distribution chamber 56 is connected by eight fuel outlet passages 60 to an equal number of fuel outlets 64 formed in the upper housing part 10, which are in turn each connected to respective fuel injectors, not shown, located for delivery of fuel into individual engine cylinders, also not shown. The flow of fuel through each outlet passage 60 is controlled by an outlet valve member 66 of a solenoid-controlled fuel outlet valve mounted in a valve chamber 62, the valve member being connected to or integral with the armature 67 of a solenoid 68. The outlet valves are arranged in the housing symmetrically around the axis of reciprocation of the plunger 26. As will be described later, each of the solenoids 68 is adapted to be actuated individually and in a particular sequence in accordance with the engine firing order to provide fuel to each of the engine cylinders at a predescribed time in accordance with a predetermined schedule. Normally, fuel pressure in the valve chamber 62 will maintain the outlet valve member 66 closed when the solenoid 66 is deenergised. However, a light spring 70 may also be provided to assure seating of the valve at this time.

Completing the construction, the lower housing part 14 contains a position sensor 72 that is electrically connected by wiring 74 to microprocessor, or other suitable electrical control means, not shown. The latter is connected to various sensors on the engine to receive input signals therefrom indicating various operating conditions of the engine. The input signals are converted into an output voltage impulse that is supplied to the main solenoid 18 for actuating the plunger 26 through its pumping stroke and a simultaneous impulse to an individual solenoid 68 so as to open only one outlet valve member 66 at a time and in succession with the others so as to provide individual injection of fuel into only one cylinder at a time.

More specifically, the pumping action of plunger 26 is caused and controlled by a magnetic force generated in the main solenoid 18. The quantity of fuel displaced by plunger 26 will be determined by the magnitude and duration of the current pulse to solenoid 18, while the timing of the injection will be defined by the timing of the pulse. Energising the solenoid 18 will drive the plunger 26 upwardly, thus pressurising the fuel and pumping it past the valve member 44 of the opened delivery control valve. The fuel will then flow past one of the outlet valve members 66 into the outlets 64 connecting the pump with that particular fuel injector in the engine cylinder. When the main solenoid 18 is deenergised, fuel pressure in the inlet passage 40 will stop the pumping movement of the plunger 26 and injection will be terminated. This is occasioned by a drop in the fuel pressure allowing the retraction valve spring 52 to move the valve member 44 downwardly until it initially cuts off communication of fuel between the distribution chamber 56 and the fuel chamber 38. A further drop in fuel pressure in chamber 38 allows the valve member 44 to move into the bore 42 thereby retracting the valve member 44 out of the fuel chamber 56 and retracting a corresponding volume of fuel from the fuel outlet passages 60. During the return stroke of pump plunger 26, the previously opened outlet valve member 66 will be closed and another valve in sequence opened so that during the next pumping stroke the fuel will be delivered to another cylinder. In a four-stroke engine, the number of plunger pumping strokes per crankshaft revolution would equal one-half the number of cylinders.

A return spring or even a return solenoid may be incorporated if desired to provide a positive return of the plunger 26 to its lower retracted position, if the supply pressure in fuel inlet passage 40 does not insure sufficiently fast return. During this return movement, the one-way check valve in the fuel inlet passage 40 will open, to fill the main passage 36 with fuel.

As stated previously, the pump is intended to serve all cylinders of a multi-cylinder engine, although in some cases, two pumps per engine could be used, if desired. As has been described, this is accomplished by means of the fuel distributor, which during each pumping stroke connects the fuel from the plunger barrel to a different cylinder, thus fueling all of the cylinders in a sequence determined by the engine firing order.

The microprocessor previously referred to would continuously monitor the operation of the engine and determine the required fuel delivery and injection timing the direct current impulses to the main solenoid 18 to be of such magnitude and duration and with such timing as needed to produce the required stroke of the plunger at the required instant to match the predetermined engine design schedule. In order to accomplish this, the position sensor 72 will feed back signals into the microprocessor permitting the latter to evaluate the actual plunger stroke, compare it with the desired one, and modify, if necessary, the current impulse sent to the main solenoid 18 until the actual plunger stroke matches the required one.

Since the same plunger, delivery valve, and position sensor are used to pump and meter the fuel into all of the cylinders, the probability of equal cylinder-to-cylinder fuel distribution is inherently higher than in the case of a multi-plunger fuel injection pump.

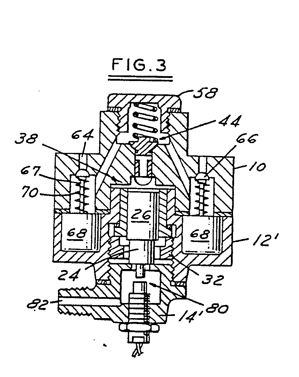

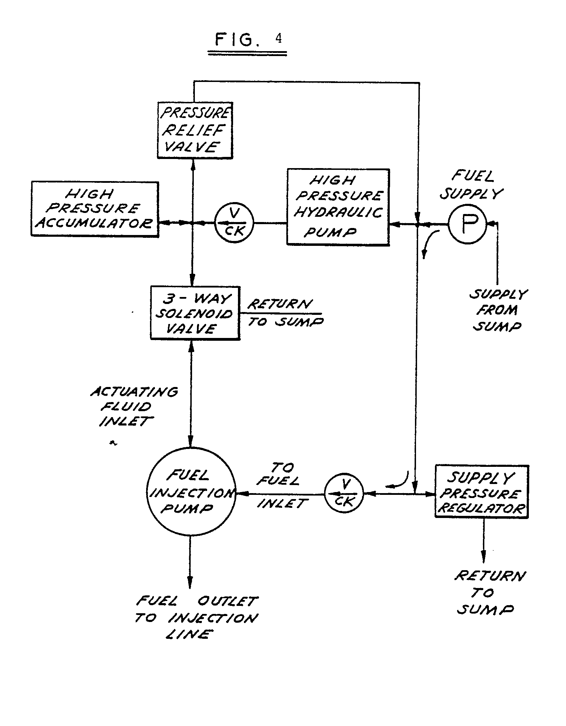

Figure 3 shows another embodiment of the invention. In this case, the plunger 26 is actuated not by a main solenoid 18, as shown in Figure 1, but by a high pressure fluid selectively applied to the bottom of the plunger to control the magnitude and duration of the plunger stroke in the desired manner. More specifically, the upper part 10 of the pump housing and upper portion of the main body part 12' remain essentially the same in construction and operation as previously described in connection with Figure 1. However, the lower portion of the main body part 12' and the lower part 14' of the housing are modified to include an actuating chamber 80. In this case, the actuating fluid is supplied to the actuation chamber 80 through an inlet 82 from a high pressure hydraulic system. This system, as seen in Figure 4, is controlled by a three-way solenoid valve controlling the supply of high pressure fluid. Thus, the quantity of fuel displaced by plunger 26 will be determined by the duration of the current pulse to the coil of the three-way solenoid, while the timing of the injection will be defined by the timing of the pulse. As a result, the operation of this embodiment of this invention is essentially the same as that described in connection with Figure 1, except for the actuating means for the plunger 26. In both the embodiments of Figures 1 and 3 however, the duration and magnitude of the force applied to the plunger 26 is varied by controlling the voltage impulses to a solenoid.

Various hydraulic fluids could be used for the actuating means of Figure 3, but using engine fuel offers one of the simplest solutions. Figure 4 is a self-explanatory diagrammatic representation of an hydraulic system that would be suitable for use in this embodiment. More specifically, a fuel supply pump delivers fuel under a moderate supply pressure through a check valve and the fuel inlet 40 to the pumping chamber 38 of the fuel injection pump. The same supply pump delivers fuel also to a high pressure hydraulic pump that pumps it through a check valve into a high pressure common fuel system including an accumulator. A pressure relief valve prevents excessive pressure buildup. Energising the solenoid of the three-way solenoid valve indicated in Figure 4 connects the actuating chamber 80 of the fuel injection pump with the high pressure hydraulic system. The deenergising of the solenoid would then connect actuating chamber 80 with the return or vent to sump.

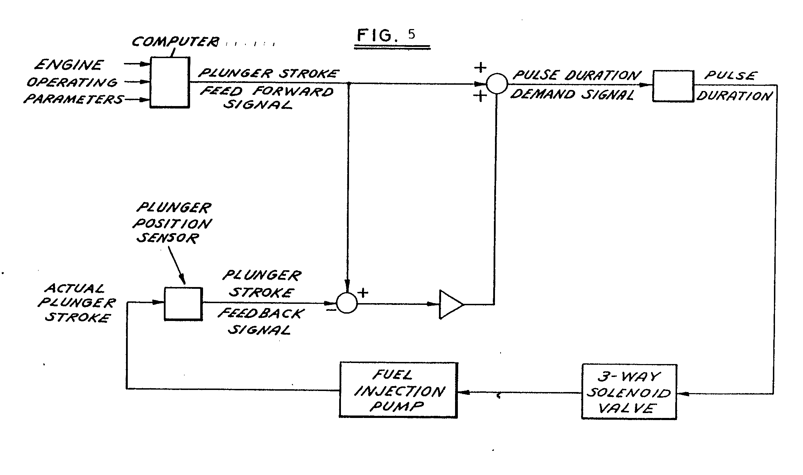

Figure 5 is a simplified block diagram of a closed loop electrical control system for use with the embodiment shown in Figure 3, and, with slight modification, for use with the embodiment also shown in Figure 1. In this case, various engine sensors develop input signals to the microprocessor or other electrical control unit. These signals are then converted into a feedforward signal in accordance with a predetermined design schedule to provide a predetermined voltage impulse to the solenoid 18 shown in Figure 1 or to the solenoid of the three-way valve indicated in Figure 4. The movement of the plunger 26 is then indicated by the position sensor, which supplies a feedback signal to the control unit where it is compared with the feedforward signal for error. If such a positive or negative error exists, a correction is made in the pulse duration and magnitude of the voltage to the solenoids, which thereby changes the stroke of the plunger 26 until the output of the plunger agrees with the schedule as called for by the control unit. Obviously, other types of control systems could be used.

## Claims

1. An automotive type internal combustion engine fuel injection pump including a housing (10, 12, 14) having a central bore (16), a plunger (26) reciprocably movable within the bore adjacent one end, a spring closed delivery control valve (44) normally blocking the other end of the bore, a source of supply fuel under a first low pressure connected to the bore space between the plunger (26) and valve (44) for supplying fuel to the space upon movement of the plunger (26) away from the valve (44) in a fuel intake stroke, the movement of the plunger towards the valve (44) in a pumping stroke providing pressurization of the fuel to a level above the delivery valve (44) spring force, a plurality of fuel outlet lines (60, 64) corresponding in number to the number of engine cylinders connected at one end to the bore downstream of the valve (44) and connected at their other ends each to a separate engine cylinder, each of the outlet lines containing a fuel outlet valve (66) normally closed to block fuel flow to the cylinders, each of the outlet valves (66) having a solenoid (68) connected thereto for moving the outlet valve (66) to an open position upon energization of its solenoid (68), the solenoids (68) being selectively energized one at a time to assure the injection of fuel into each cylinder on a one at a time schedule, force means to reciprocate the plunger, and stroke control means to variably control the stroke of the plunger (26) to vary the duration and magnitude of injection of fuel to each of the outlet lines, the force means comprising a main solenoid (18) having an armature (22) connected to the plunger (26), the control means including electrical means to vary the voltage impulses to the main solenoid as a function of varying engine operating conditions to vary the duration and magnitude of pumping fuel by the plunger to agree with a predetermined schedule, the control means also energising the fuel outlet line solenoids (68) in sequence one at a time while deenergizing the remaining fuel outlet line solenoids to connect the output from the plunger past a different outlet valve upon each successive pumping stroke of the plunger, and feedback position sensor means (72) sensing the position of the plunger and connected to the electrical means for correcting the pumping stroke of the plunger thereby providing pumping fuel in accordance with the predetermined schedule.

2. A pump as claimed in Claim 1, the outlet valve solenoids being coaxially mounted with respect to the plunger axis to surround the same and being circumferentially spaced from one another to form a compact pump unit.

3. A pump as claimed in Claim 1 or 2 including adjustable stop means limiting the intake stroke of the plunger.

4. A pump as claimed in any one of claims 1 to 3, the delivery valve comprising a retraction type valve retracting a predetermined volume of fuel from the activated outlet line during the intake stroke movement of the plunger to reduce the residual pressure in the outlet lines.

5. A pump as claimed in Claim 1, the solenoids and outlet valves consisting of a series of solenoids connected and controlled valves arranged in a circular pattern around the plunger, the outlet valves being operated in sequence in accordance with the firing order of the engine to deliver fuel to the appropriate engine cylinder.

6. A pump as claimed in any one of the preceding claims, including a fuel distribution chamber between the delivery valve and the outlet lines.

7. An automotive type internal combustion engine fuel injection pump including a housing (10, 12, 14) having a central bore (16), a plunger (26) reciprocably movable within the bore adjacent one end, a spring closed delivery control valve (44) normally blocking the other end of the bore, a source of supply fuel under a first low pressure connected to the bore space between the plunger (26) and valve (44) for supplying fuel to the space upon movement of the plunger (26) away from the valve (44) in a fuel intake stroke, the movement of the plunger towards the valve (44) in a pumping stroke providing pressurisation of the fuel to a level above the delivery valve (44) spring force, a plurality of fuel outlet lines (60, 64) corresponding in number to the number of engine cylinders connected at one end to the bore downstream of the valve (44) and connected at their other ends each to a separate engine cylinder, each of the outlet lines containing a fuel outlet valve (66) normally closed to block fuel flow to the cylinders, each of the outlet valves (66) having a solenoid (68) connected thereto for moving the outlet valve (66) to an open position upon energization of its solenoid (68), the solenoids (68) being selectively energized one at a time to assure the injection of fuel into each cylinder on a one at a time schedule, force means to reciprocate the plunger, and stroke control means to variably control the stroke of the plunger (26) to vary the duration and magnitude of injection of fuel to each of the outlet lines, the force means comprising a source of high pressure fluid selectively connectable to the plunger for moving the same, the control means including electrical means to apply and vent the fluid to and from the plunger and to control the duration and magnitude of the fluid force level to control the pumping stroke of the plunger, the control means also energising the fuel outlet line solenoids (68) in sequence one at a time while deenergising the remaining fuel outlet line solenoids to connect the output from the plunger past a different outlet valve upon each successive pumping stroke of the plunger, and feedback position sensor means (72) sensing the position of the plunger and connected to the electrical means for correcting the pumping stroke of the plunger thereby providing pumping fuel in accordance with the predetermined schedule.

8. A pump as in claim 7, including further solenoid controlled valve means connected to the electrical means, the valve being movable to an open position upon energization of the further solenoid to apply the fluid to the plunger and movable to a fluid vent position upon deenergization of the fluid, the electrical means controlling the impulse voltage duration and magnitude to the further solenoid to control the duration and magnitude of fuel pumped by the plunger by controlling the pumping stroke thereof.

9. A pump as claimed in Claim 7 or 8, wherein the high pressure fluid is engine fuel, and including a fuel pump for pressurizing the engine fuel to the high pressure level.

**Revendications**

1. Pompe d'injection de combustible pour moteur à combustion interne du type automobile, comprenant un boîtier (10, 12, 14) présentant un alésage central (16), un plongeur (26) mobile de manière alternative à l'intérieur de l'alésage et au voisinage d'une extrémité, une soupape de commande de refoulement à fermeture par ressort (44) obstruant normalement l'autre extrémité de l'alésage, une source de combustible d'alimentation se trouvant sous une première pression, faible, et reliée, au volume de l'alésage situé entre le plongeur (26) et la soupape (44) afin de fournir du combustible à ce volume lors d'un déplacement du plongeur (26) s'éloignant de la soupape (44) au cours d'une course d'admission de combustible, le mouvement du plongeur vers la soupape (44) au cours d'une course de pompage fournissant la mise sous pression du combustible à un niveau supérieur à la force du ressort de la soupape de refoulement (44), plusieurs lignes de sortie de combustible (60, 64) dont le nombre correspond au nombre des cylindres du moteur et qui sont reliées à une extrémité à l'alésage en aval de la soupape (44) et reliées à leur autre extrémité, chacune à un cylindre distinct du moteur, chacune de ces lignes de sortie contenant une vanne de sortie de combustible (66) normalement fermée de façon à obstruer l'écoulement du combustible vers les cylindres, chacune de ces vannes de sortie (66) présentant un électro-aimant (68) qui lui est relié de façon à déplacer la vanne de sortie (66) vers une position ouverte lors de la mise sous tension de son électro-aimant (68), les électro-aimants (68) étant mis sous tension de façon sélective, un à la fois, de manière à assurer l'injection de combustible dans chaque cylindre suivant un programme un à la fois, des moyens de fourniture de force pour déplacer le plongeur suivant un mouvement alternatif, et des moyens de commande de course pour commander de manière variable la course du plongeur (26) afin de faire varier la durée et l'importance de l'injection combustible vers chacune des lignes de sortie, les moyens de fourniture de force comprenant un électro-aimant principal (18) présentant un induit (22) relié au plongeur (26), les moyens de commande comprenant des moyens électriques pour faire varier les impulsions de tension envoyées à l'électro-aimant principal en fonction de conditions variables de fonctionnement du moteur afin de faire varier la durée et l'importance du pompage du combustible par le plongeur afin de s'accorder avec un programme prédéterminé, les moyens de commande mettant également sous tension les électro-aimants (68) des lignes de sortie de combustible suivant une séquence un à la fois, tout en mettant hors tension les électro-aimants restants des lignes de sortie de combustible afin de relier la sortie du plongeur à une vanne différente de sortie lors de chaque course successive de pompage du plongeur, et des moyens de rétroaction détecteurs de position (72) détectant la position du plongeur et reliées aux moyens électriques pour corriger la course de pompage du plongeur, en fournissant ainsi un pompage de combustible conforme au programme prédéterminé.

2. Pompe telle que revendiquée dans la revendication 1, les électro-aimants des vannes de sortie étant montés de manière coaxiale par rapport à l'axe du plongeur de façon à entourer ce dernier et à être espacés circonférentiellement l'un de l'autre de façon à former une unité de pompe compacte.

3. Pompe telle que revendiquée dans la revendication 1 ou 2, comprenant des moyens réglables de butée limitant la course d'admission du plongeur.

4. Pompe telle que revendiquée dans l'une quelconque des revendications 1 à 3, la soupape de refoulement comprenant une soupape du type à rétraction aspirant un volume prédéterminé de combustible à partir de la ligne de sortie en service au cours du déplacement de course d'admission du plongeur afin de réduire la pression résiduelle dans les lignes de sortie.

5. Pompe telle que revendiquée dans la revendication 1, les électro-aimants et vannes de sortie étant constitués par une série de vannes commandées et reliées par électro-aimants, disposées suivant un agencement circulaire autour du plongeur, les vannes de sortie étant manoeuvrées de manière séquentielle en conformité à l'ordre d'allumage du moteur afin de refouler du combustible vers le cylindre approprié du moteur.

6. Pompe telle que revendiquée dans l'une quelconque des revendications précédentes, comprenant une chambre de distribution de combustible entre la soupape de refoulement et les lignes de sortie.

7. Pompe d'injection de combustible pour moteur à combustion interne du type automobile, comprenant un boîtier (10, 12, 14) présentant un alésage central (16), un plongeur (26) mobile de manière alternative à l'intérieur de l'alésage et au voisinage d'une extrémité, une soupape de commande de refoulement à fermeture par ressort (44) obstruant normalement l'autre extrémité de l'alésage, une source de combustible d'alimentation se trouvant sous une première pression, faible, et reliée au volume de l'alésage situé entre le plongeur (26) et la soupape (44) afin de fournir du combustible à ce volume lors d'un déplacement du plongeur (26) s'éloignant de la soupape (44) au cours d'une course d'admission de combustible, le mouvement du plongeur vers la soupape (44) au cours d'une course de pompage fournissant la mise sous pression du combustible à un niveau supérieur à la force du ressort de la soupape de refoulement (44), plusieurs lignes de sortie de combustible (60, 64) dont le nombre correspond au nombre des cylindres du moteur et qui sont reliées à une extrémité à l'alésage en aval de la soupape (44) et reliées à leur autre extrémité, chacune à un cylindre distinct du moteur, chacune de ces lignes de sortie contenant une vanne de sortie de combustible (66) normalement fermée de façon à obstruer l'écoulement du combustible vers les cylindres, chacune de ces vannes de sortie (66) présentant un électro-aimant (68) qui lui est relié de façon à déplacer la vanne de sortie (66) vers une position ouverte lors de la mise sous tension de son électro-aimant (68), les électro-aimants (68) étant mis sous tension de façon sélective, un à la fois, de manière à assurer l'injection de combustible dans chaque cylindre suivant un programme un à la fois, des moyens de fourniture de force pour déplacer le plongeur suivant un mouvement alternatif, et des moyens de commande de course pour commander de manière variable la course du plongeur (26) afin de faire varier la durée et l'importance de l'injection de combustible vers chacune des lignes de sortie, les moyens de fourniture de force comprenant une source de fluide sous pression élevée pouvant être reliée de manière sélective au plongeur pour déplacer celui-ci, les moyens de commande comprenant des moyens électriques pour amener le fluide au plongeur et l'évacuer à partir de ce plongeur et pour commander la durée et l'intensité de la force du fluide afin de contrôler la course de pompage du plongeur, les moyens de commande mettant également sous tension les electro-aimants (68) des lignes de sortie de combustible suivant une séquence un à la fois, tout en mettant hors tension les électro-aimants restants des lignes de sortie de combustible afin de relier la sortie au plongeur par une vanne différente de sortie lors de chaque course successive de pompage de plongeur, et des moyens de rétro-action détecteurs de position (72) détectant la position du plongeur et reliés aux moyens électriques pour corriger la course de pompage du plongeur, en fournissant ainsi un pompage de combustible conforme au programme prédéterminé.

8. Pompe comme dans la revendication 7, comprenant d'autres moyens à vanne commandée par électro-aimant reliés aux moyens électriques, la vanne étant mobile vers une position ouverte lors de la mise sous tension de son électro-aimant afin d'appliquer le fluide sur le plongeur, et mobile vers une position de purge de fluide lors de la mise hors tension de l'électro-aimant, les moyens électriques contrôlant la durée et l'intensité de la tension d'impulsion envoyée à l'autre solénoïde afin de contrôler la durée et l'importance du combustible pompé par le plongeur en contrôlant la course de pompage ce celui-ci.

9. Pompe telle que revendiquée dans la revendication 7 ou 8, dans laquelle le fluide sous haute pression est le combustible du moteur, et comprenant une pompe à combustible pour mettre sous pression le combustible du moteur jusqu'au niveau de pression élevée.

**Patentansprüche**

1. Kraftsoffeinspritzpumpe der Art für Kraftfahrzeug-Verbrennungsmotoren, mit einem Gehäuse (10, 12, 14) mit einer mittigen Bohrung (16), einem darin hin- und herbeweglichen Kolben (26) an einem Ende, einem federblasteten, gesteuerten, normalerweise das andere Ende der Bohrung verschliessenden Druckventil (44), einer unter einem ersten, niedrigen Druck mit dem Bohrungsraum zwischen dem Kolben (26) und dem Ventil (44) verbundenen Kraftstoffversorgungsquelle zur Förderung von Kraftstoff in den Raum bei Hinwegbewegung des Kolbens (26) vom Ventil (44) während des Kraftstoffeinlasshubs, wobei Bewegung des Kolbens zum Ventil (44) hin beim Pumphub den Kraftstoff auf einen über der Federkraft des Druckventils (44) liegenden Druck bringt, einer Mehrzahl von Kraftstoffauslassleitungen (60, 64), deren Anzahl der Anzahl Motorzylinder entspricht, und die an einem Ende mit der Bohrung stromabwärts des Ventils (44) und an ihren anderen Enden jeweils mit einem getrennten Motorzylinder verbunden sind, wobei die Auslassleitungen jeweils ein Kraftstoffauslassventil (66) enthalten, das normalerweise zur Absperrung der Kraftstoffströmung zu den Zylindern geschlossen ist, wobei die Auslassventile (66) je eine damit verbundene Magnetspule (68) zum Bewegen des Auslassventils (66) in eine offene Stellung bei Erregung seiner Magnetspule (68) aufweisen, wobei jeweils eine der Magnetspulen (68) selektiv erregt wird, um Kraftstoffeinspritzung in die Zylinder jeweils einzeln nach einem Zeitplan sicherzustellen, mit Kraftvorrichtungen zur Hin- und Herbewegung des Kolbens und mit Hubregeleinrichtungen zur variablen Regelung des Kolbenhubs (26), um die Dauer und Grösse der Kraftstoffeinspritzung zu den Auslassleitungen jeweils zu variieren, wobei die Kraftvorrichtungen aus einer Hauptmagnetspule (18) mit einem mit dem Kolben (26) verbundenen Anker (22) bestehen, wobei die Regeleinrichtungen elektrische Mittel zur Veränderung der Spannungsimpulse an die Hauptmagnetspule in Abhängigkeit von wechselnden Motorbetriebsbedingungen umfassen, um die Dauer und Menge des Kraftstoffpumpens durch den Kolben zwecks Übereinstimmung mit einem vorbestimmten Plan einzustellen, wobei die Regeleinrichtungen ferner die Magnetspulen (68) der Kraftstoffauslassleitungen jeweils einzeln nacheinander erregen und gleichzeitig die Magnetspulen der übrigen Kraftstoffauslassleitungen entregen, um den Ausstoss des Kolbens bei jedem aufeinanderfolgenden Pumphub des Kolbens mit einem anderen Auslassventil zu verbinden, sowie mit rückführenden Stellungsabtastvorrichtungen (72), welche die Stellung des Kolbens abtasten und mit den elektri-schen Mitteln zum Verstellen des Pumphubs des Kolbens verbunden sind, um dadurch gepumpten Kraftstoff gemäss dem vorbestimmten Plan zu liefern.

2. Pumpe nach Anspruch 1, wobei die Auslassventilmagnetspulen koaxial um die Kolbenachse angeordnet sind, so dass sie diese umgeben und zur Bildung einer kompakten Pumpeneinheit auf Umfangsabstand voneinander angeordnet sind.

3. Pumpe nach Anspruch 1 oder 2, ferner mit verstellbaren Anschlagvorrichtungen zur Begrenzung des Einlasshubs des Kolbens.

4. Pumpe nach Ansprüche 1 oder 2, wobei das Druckventil ein Ventil vom Rückzugstypus darstellt, das bei der Einlasshubbewegung des Kolbens ein vorbestimmtes Kraftstoffvolumen aus der aktivierten Auslassleitung zurückzieht, um den Restdruck in den Auslassleitungen zu verringern.

5. Pumpe nach Anspruch 1, wobei die Magnetspulen bzw. Auslassventile aus einer Reihe von Magnetspulen bzw. geregelten Ventilen bestehen, die in kreisförmigem Muster um den Kolben herum verbunden bzw. angeordnet sind, wobei die Auslassventile nacheinander gemäss der Zündfolge des Motors betätigt werden, um dem entsprechenden Motorzylinder Brennstoff zu liefern.

6. Pumpe nach einem der vorhergehenden Ansprüche, ferner mit einer Kraftstoffverteilungskammer zwischen dem Druckventil und den Auslassleitungen.

7. Kraftstoffeinspritzpumpe der Art für Kraftfahrzeug-Verbrennungsmotoren, mit einem Gehäuse (10, 12, 14) mit einer mittigen Bohrung (16), einem darin hin- und herbeweglichen Kolben (26) an einem Ende, einem federbelasteten, gesteuerten, normalerweise das andere Ende der Bohrung verschliessenden Druckventil (44), einer unter einem ersten, niedrigen Druck mit dem Bohrungsraum zwischen dem Kolben (26) und dem Ventil (44) verbundenen Kraftstoffversorgungsquelle zur Förderung von Kraftstoff in den Raum bei Hinwegbewegung des Kolbens (26) vom Ventil (44) während des Kraftstoffeinlasshubs, wobei Bewegung des Kolbens zum Ventil (44) hin beim Pumphub den Kraftstoff auf einen über der Federkraft des Druckventils (44) liegenden Druck bringt, einer Mehrzahl von Kraftstoffauslassleitungen (60, 64), deren Anzahl der Anzahl Motorzylinder entspricht, und die an einem Ende mit der Bohrung stromabwärts des Ventils (44) und an ihren anderen Enden jeweils mit einem getrennten Motorzylinder verbunden sind, wobei die Auslassleitungen jeweils ein Kraftstoffauslassventil (66) enthalten, das normalerweise zur Absperrung der Kraftstoffströmung zu den Zylindern geschlossen ist, wobei die Auslassventile (66) je eine damit verbundene Magnetspule (68) zum Bewegen des Auslassventils (66) in eine offene Stellung bei Erregung seiner Magnetspule (68) aufweisen, wobei jeweils eine der Magnetspulen (68) selektiv erregt wird, um Kraftstoffeinspritzung in die Zylinder jeweils einzeln nach einem Zeitplan sicherzustellen, mit Kraftvorrichtungen zur Hin- und Herbewegung des Kolbens und mit Hubregeleinrichtungen zur variablen Regelung des Kolbenhubs (26), um die Dauer und Grösse der Kraftstoffeinspritzung zu den Auslassleitungen jeweils zu variieren, wobei die Kraftvorrichtungen aus einer Hochdruckfluidquelle bestehen, die selektiv mit dem Kolben zu dessen Bewegung verbindbar ist, wobei die Regeleinrichtungen elektrische Mittel zur Beaufschlagung des Kolbens mit dem Fluid und dessen Entlüftung und zur Steuerung der Dauer und Grösse des Fluidkraftniveaus zur Regelung des Pumphubs des Kolbens umfassen, wobei die Regeleinrichtungen ferner die Magnetspulen (68) der Kraftstoffauslassleitungen jeweils einzeln nacheinander erregen und gleichzeitig die Magnetspulen der übrigen Kraftstoffauslassleitungen entregen, um den Ausstoss des Kolbens bei jedem aufeinanderfolgenden Pumphub des Kolbens mit einem anderen Auslassventil zu verbinden, sowie mit rückführenden Stellungsabtastvorrichtungen (72), welche die Stellung des Kolbens abtasten und mit den elektrischen Mitteln zum Verstellen des Pumphubs des Kolbens verbunden sind, um dadurch gepumpten Kraftstoff gemäss dem vorbestimmten Plan zu liefern.

8. Pumpe nach Anspruch 7, ferner mit einem weiteren, durch eine Magnetspule gesteuerten und mit den elektrischen Mitteln verbundenen Ventil, das bei Erregung der weiteren Magnetspule in eine offene Stellung zur Beaufschlagung des Kolbens mit Fluid und bei Entregung des Fluids in eine Fluidentlüftungsstellung bewegbar ist, wobei die elektrischen Mittel die Dauer und Grösse der Impulsspannung für die weitere Magnetspule steuern, um die Dauer und Grösse des Kraftstoffpumpens durch den Kolben mittels Verstellung von dessen Pumphub zu regeln.

9. Pumpe nach Anspruch 7 oder 8, worin das Hochdruckfluid Motorkraftstoff ist und ferner eine Kraftstoffpumpe, um den Motorkraftstoff auf das Hochdruckniveau zu bringen, vorgesehen ist.

## FIG.1

## FIG.2

## FIG.3

FIG. 4

FIG. 5